# EUROPEAN PATENT SPECIFICATION

(11) **EP 2 100 504 B1**
(45) Date of publication and mention of the grant of the patent: **28.03.2012**
(21) Application number: 09154341.3
(22) Date of filing: 04.03.2009
(51) Int. Cl.: A01M 25/00

(54) **A bait station for eliminating rodents**
Köderfalle zur Beseitigung von Nagetieren
Station d'appât pour éliminer les rongeurs

(30) Priority: 11.03.2008 IT RE20080028
(43) Date of publication of application: 16.09.2009
(73) Proprietor: O.S.D. Gruppo Ecotech S.R.L., 41011 Campogalliano (Modena) (IT)
(72) Inventor: Gaibotti, Paolo, 41011 Campogalliano (MODENA) (IT)
(74) Representative: Corradini, Corrado

(56) References cited:
- CA-A1- 2 656 269
- DE-U1-202007 008 355
- US-A1- 2003 145 511
- US-B1- 6 671 999

## Description

This invention concerns a bait station for use in eliminating rodents, in particular for eliminating mice and/or rats.

As is known, a technique for eliminating rodents consists of placing comestible bait in the rooms to be freed from rodents, the bait having been treated with suitable poisonous substances which cause the animal's death, preferably with a delay, thus allowing the animal to leave the site undisturbed and then die far away from the bait.

Usually, poisoned baits are placed inside special bait stations, which comprise a protective container, the container being provided with an entrance and an exit for the rodent, and being further provided with a openable lid, through which an operator arranges the bait inside a small internal bait-holder, and then checking from time to time whether the bait has been consumed, before beginning the search for the bodies of dead animals. The openable lid is generally provided with a safety lock, so that it can only be opened by an operator who is familiar with the effects of the poisons being used, and is therefore also familiar with the precautions which must be taken when preparing and/or manipulating poisoned bait.

For this reason, bait stations in the prior art can only be used within the ambit of a professional rodent elimination operation which is carried out and controlled by professional experts: bait stations of this known type are totally unsuitable for domestic use by unskilled users.

In particular, CA 2 656 269 and US 2003/145511 disclose a bait station for eliminating rodents and insects as defined in the preamble of claim 1.

The aim of this invention is therefore to provide a bait station for rodent elimination, the use of which does not require the user to prepare or handle poisoned bait, and which can therefore be used safely by non-professional users, for example in the ambit of a do-it-yourself rodent elimination operation.

A further aim of the invention is to provide a bait station in which the poisoned bait is inaccessible both to the user and any unsuspecting persons who might handle the station, for example children, thus removing the risk of accidental contact with the poison.

A third aim of the invention is to provide a bait station which can be sold without any restrictions and without causing risks to distributors and retailers, and which preserves the effectiveness of the poisoned bait for the entire time span between production of the bait station and its use, this time span for example comprising a period for storage in a warehouse, transport and sale of the bait station.

A further aim of the invention is to achieve the above-mentioned objectives within the ambit of a simple, rational and low-cost solution.

These aims are achieved by the characteristics of the invention described in independent claim 1. The dependent claims delineate preferred and/or particularly advantageous aspects of the invention.

In detail, the invention makes a bait station of a substantially disposable type available, comprising an unopenable container which is provided with at least one opening through which a rodent can enter and exit, a poisoned bait which is housed within the container in such a way that the bait cannot be touched by a user's hands, and means for sealing the poisoned bait inside the container which means can be opened from outside the container.

This solution enables all the aims delineated in the preamble to be achieved. Use of an unopenable container effectively prevents an unskilled user or any unsuspecting person from voluntarily or accidentally coming into contact with the poisoned bait, either during placement of the bait station, or while the bait station is left in the room which is to be cleared of rodents, thus preventing any contact with the poison and consequently preventing any risk of poisoning.

The means for sealing also ensure that the poisoned bait is completely enclosed within the container during all the phases of distribution and marketing of the bait station, thus avoiding any danger for those working in these sectors, and at the same time protecting the bait and preserving it from deterioration and consequently from any possible loss of effectiveness.

The means for sealing which are openable from the exterior also allow the bait station to be put in place and activated without the user having to handle the poisoned bait directly, so that the station is entirely suitable for domestic use, within the ambit of a do-it-yourself rodent elimination operation.

In a preferred embodiment of the invention, the means for sealing comprise a tray, and a removable film which encloses the poisoned bait in the tray. The tray is housed inside the container, while the removable film is provided with a free tab which projects from the container, in such a way that a user can grip and pull the tab with the fingers in order to open the tray and thus activate the station.

Alternatively, the poisoned bait can be freely exposed inside the container, and the means for sealing can comprise individual removable portions of film which are fixed to the exterior of the container to close the access apertures, or otherwise, a single openable wrapping made for example of cellophane, which is wrapped around the container, and encloses it.

In a preferred aspect of the invention, the container comprises at least one transparent window, through which the user can see whether the poisoned bait has been consumed, before proceeding to search for dead rodent bodies.

In a further preferred aspect of the invention, the container also contains an insecticide device which attracts and kills insects, preferably crawling insects such as cockroaches, and therefore the container is also provided with small openings to allow the insects to enter the container.

In this way, the bait station of the invention becomes an effective multifunctional device, which not only eliminates mice and rats, but also insects.

Further characteristics and advantages of the invention will emerge from the following detailed description, which is provided by way of a non-limiting example, with the aid of the appended figures of the drawings.
Figure 1 is a perspective view of a bait station of the invention, shown in an assembled condition.
Figure 2 is a perspective view of a bait station of the invention, which is shown partially disassembled in order to illustrate some of the characteristics of the invention more clearly.
Figure 3 is a side view of the tray which holds the poisoned bait.
Figures from 4 to 7 are orthogonal projection views of the bait station of figure 1.
Figure 8 is a plan view of only the lower half of the bait station of figure 1.
Figure 9 is a section view of the bait station taken along the plane IX-IX of figure 8.
Figure 10 is a perspective view of an alternative embodiment of the invention.

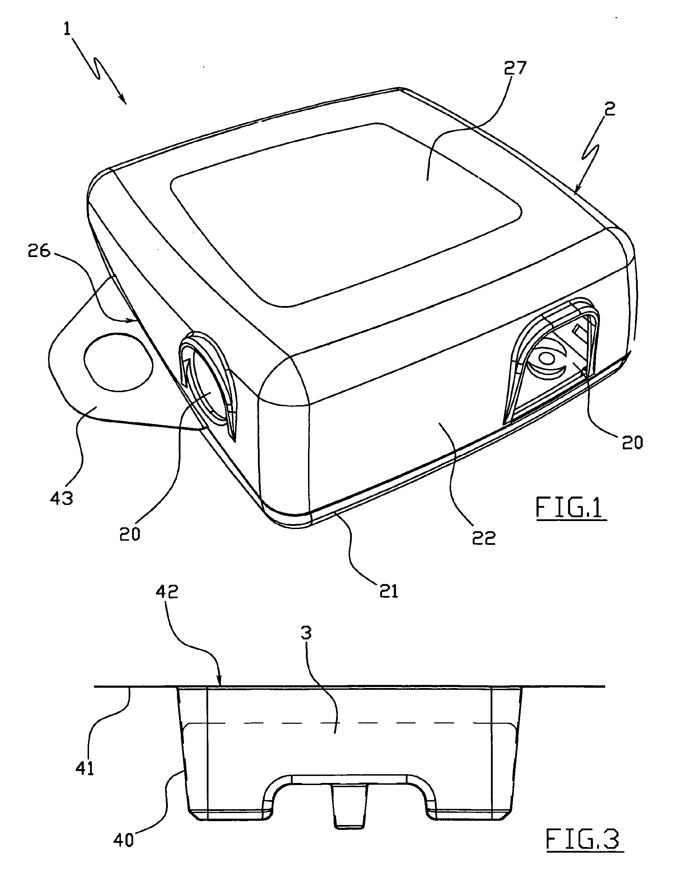

Figures 1 to 9 illustrate a disposable bait station 1 which can be used to exterminate rodents, especially mice and/or rats.

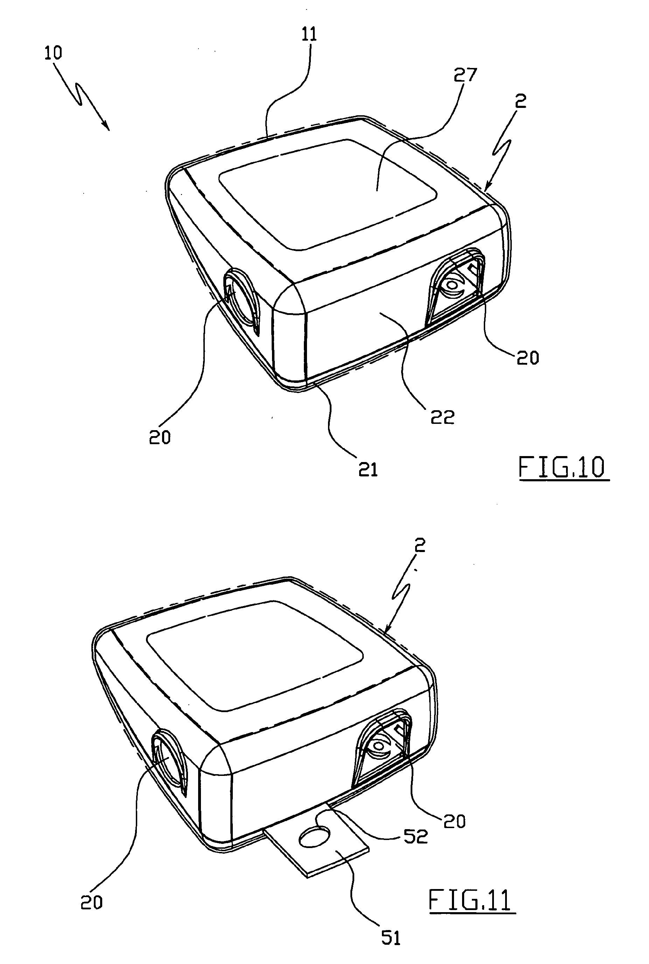

Figure 11 is a perspective view of an alternative embodiment of the invention.

Schematically, the bait station 1 comprises an external container 2 which is unopenable, that is, not easily opened by a user by hand, unless obviously by intervening with force or destructively.

A poisoned bait 3 is received and fixed inside the container 2 in such a way that it cannot exit from the container 2, or be reached or touched by the user by hand.

Preferably, the poisoned bait 3 is a comestible substance with a doughy consistency, and which is particularly attractive to rodents, one or more toxic substances which are lethal to rodents, such as for example anticoagulants such as bromodiolone, brodifacoum, difenacoum or the like, having been added to the comestible substance.

As shown in figure 3, the poisoned bait 3 is contained and sealed in an impermeable tray 40 which is preferably made of plastic material using a thermoforming process, the mouth of the tray exhibiting a flat perimetral edge 41 which is folded towards the exterior, and to which a removable film 42 is welded, the removable film 42 for example being made of plastic material or of aluminium and hermetically sealing the poisoned bait 3 inside the tray 40.

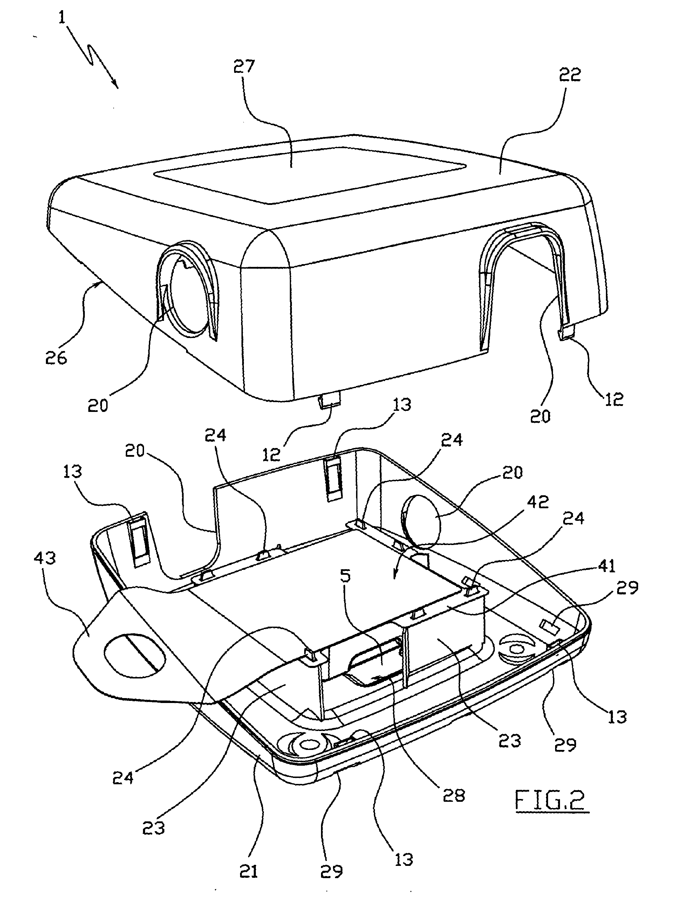

In detail, the removable film 42 exhibits a free tab 43 of rather large dimensions (see figure 2), which can be gripped and pulled with the fingers, in such a way as to remove the film 42 from the tray 40, thus making the poisoned bait 3 accessible from the exterior.

The container 2 is substantially conformed as a rigid shell which encloses the tray 40 on all sides, thus delimiting an inner chamber which a rodent can enter in order to eat the poisoned bait 3.

In general, the container 2 must be provided with at least one access opening which allows a rodent to enter and exit. However it is preferable for the container 2 to be provided with at least two access openings, each of which is visible from the other, since it is known that rodents are wary of entering closed environments from which they cannot identify at least one escape route.

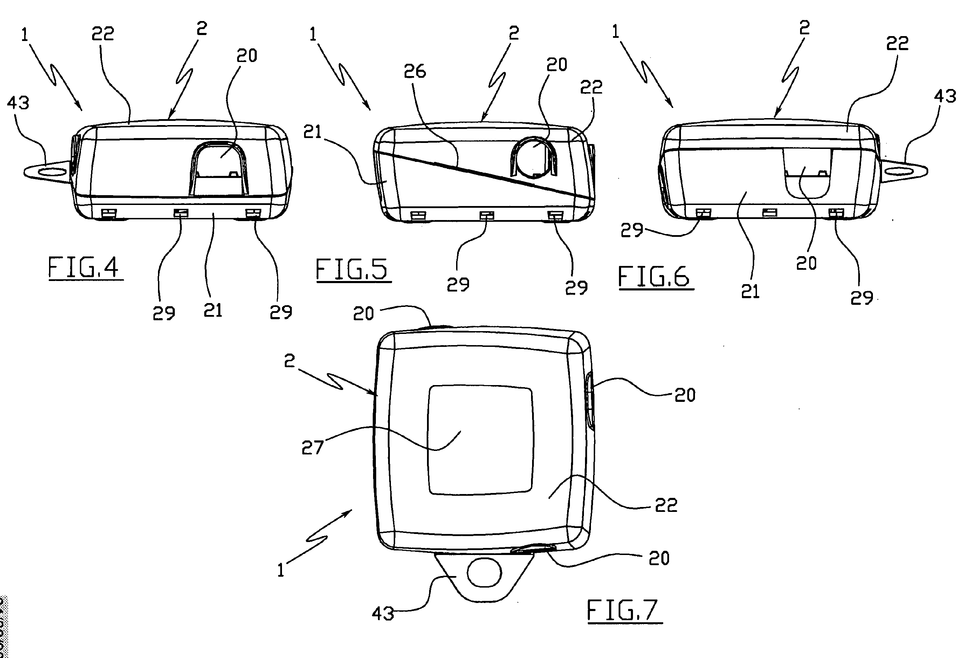

As shown in figures 4 to 7, the described container 2 exhibits a substantially square exterior form, with a flat bottom and top, and four side walls which give the container 2 a generally rectangular plan shape, in this particular instance square, the tray 40 with the poisoned bait being arranged at the centre of the rectangle.

Each side wall affords an access opening 20 leading to the internal chamber, which chamber is positioned in such a way that from the chamber it is possible to see the access openings 20 afforded in the adjacent side walls.

In particular, the container 2 is provided with two access openings 20 exhibiting a curved shape and afforded in two oppositely-positioned side walls, and two trapezoidal access openings 20 afforded in the remaining side walls.

In this way, the container 2 can be rested on the floor and be placed near a corner in the room to be cleared of vermin, attracting little attention and occupying little space, without being any the less effective. The walls of the room at the corner thereof will in effect close two access openings 20 on two consecutive sides of the container 2, leaving open the access openings 20 on the two opposite sides however, which access openings 20 are both reciprocally visible.

As shown in figure 2, the container 2 comprises two half-shells, a lower half-shell 21 which comprises the base wall, and an upper half-shell 22 which comprises the top wall, which half-shells 21, 22 are preferably made of injection-moulded plastic material, and are coupled together by inseparable connecting means.

The connecting means are of the snap-tab variety, that is, they comprise a plurality of snap-in tabs 12 which are afforded along two sides of the upper half-shell 22 and which couple with corresponding seatings 13 afforded in the lower semi-shells 21, in such a way that after coupling, the snap-in tabs are not accessible from the outside and the tabs can therefore not be freed from the respective seatings 13.

Alternatively, the connecting means could comprise a weld, joining the two semi-shells 21 and 22 along the perimetral edges which are reciprocally in contact.

Note that in the example shown in figure 5, the perimetral edges which are reciprocally in contact lie in an inclined plane. This does not however mean that the two edges might not lie in a horizontal plane, that is, parallel to the base and summital walls.

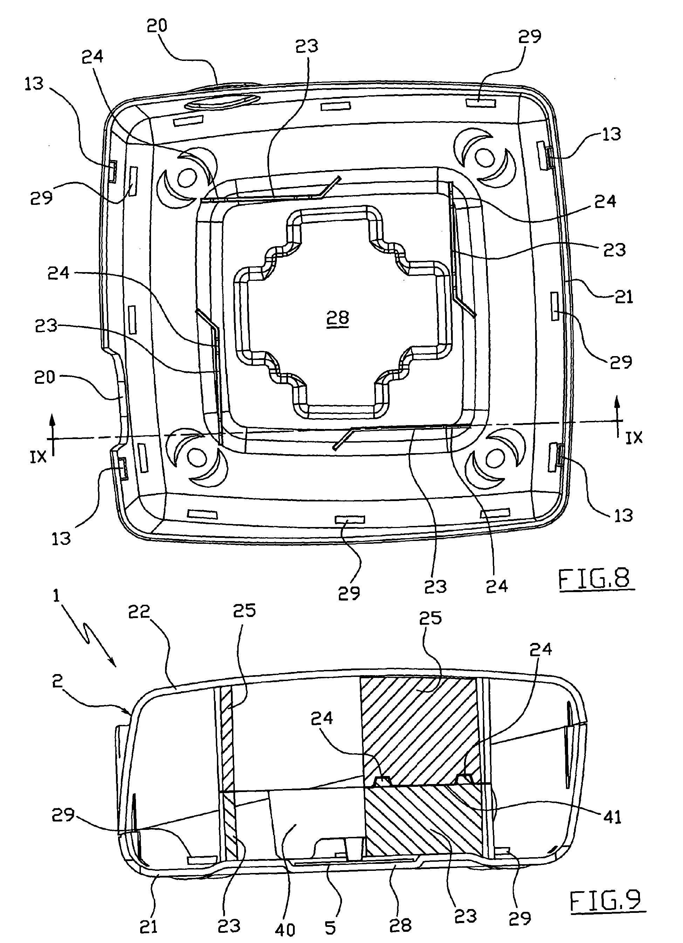

The lower half-shell 21 comprises four thin ascending walls 23, preferably all the same as each other, extending from the base wall and projecting towards the interior of the chamber of the container 2 (see figures 8 and 9).

In plan view the ascending walls 23 are positioned at the centre of the container 2, where they delimit an open enclosure, which snugly receives the tray 40 containing the poisoned bait 3.

In the example shown, the tray 40 exhibits a substantially rectangular shape in plan view, such that the four ascending walls 23 are arranged along the four sides of a rectangular enclosure.

In detail, the upper flat surfaces of the ascending walls 23 contemporaneously and restingly receive the folded edge 41 of the tray 40, and are singly provided with one or more projecting teeth 24, which are singly inserted in a corresponding slot which is afforded in the folded edge 41, such as to fix the tray 40 in a position with its mouth and the removable film 42 facing upwards (see also figure 2).

In turn, the upper half-shell 22 comprises four slim descending walls 25 (see figure 9), which extend from the top wall and project towards the interior of the chamber of the container 2.

The descending walls 25 in plan view are positioned at the centre of the container 2, such that each of them can be aligned with and can perfectly complement a respective ascending wall 23 of the lower half-shell 21.

The lower flat surfaces of the descending walls 25 press the inclined edge 41 of the tray 40 against the upper surfaces of the ascending walls 23, and are singly provided with at least one cavity which receives the projecting tooth 24 of the relative ascending wall 23.

In this way, the descending walls 25 delimit an upper enclosure which surrounds the tray 40, but which, being partially open on all sides, nevertheless allows a rodent to reach the poisoned bait 3.

As can be seen in figures 2 and 8, each ascending wall 23 is positioned substantially in front of a respective opening access 20, where together with the relative descending wall 25 it forms a single continuous separator which extends for the entire height of the container 2 (see figure 9).

In this way, the ascending walls 23 and the descending walls 25 do not serve only as support for the edge 41 of the tray 40, but also have the important function of preventing contact from the exterior with the tray 40 containing the poisoned bait 3.

In fact a user who voluntarily or accidentally inserted fingers into the access openings 20 would touch the separators formed by each ascending wall 23 and by the relative descending wall 25, which separators together extend for the entire height, without ever being able to reach the tray 40.

Note however that the number of ascending wall 23 and thus of the corresponding descending walls 25 is purely illustrative. In general in fact, two ascending walls alone 23, supporting two opposite sides of the inclined edge 41 of the tray 40, or else a single ascending wall exhibiting a profile in plan view which extends along at least three consecutive sides of the inclined edge 41, might be sufficient.

Note also that the ascending walls 23 and/or the descending walls 25 could effectively be replaced by other projecting elements which support and tightly grip the inclined edge 41 of the tray; for example they could be replaced by two or more cylindrical columns.

Further, the container 2 exhibits a side wall which affords a slit 26, through which the free tab 43 of the removable film 32 which closes the tray 40 is inserted and projects externally.

In this way, a user can easily open the tray 40 by pulling the projecting portion of the free tab 43 from the outside, without coming into contact with the poisoned bait 3, the tray 40 being enclosed and blocked in position inside the container 2.

Preferably the slit 26 is defined by the interface between the two half-shells 21 and 22, in such a way as to be open on the side when the two half-shells are separated (see figure 2)

In this way, the bait station 1 can be assembled very easily and rapidly.

When the half-shells 21 and 22 are separated, a closed tray 40 containing the poisoned bait 3 is restingly placed on the ascending walls 23 of the lower half-shell 21, with the slots of the inclined edge 41 inserted on the projecting teeth 24, the tray 40 being oriented in such a way that the free tab 43 of the film 42 rests on the outer edge of the half-shell 21, in the tract in which the slit 26 will be defined.

Then the upper half-shell 22 is coupled on, taking care that the projecting teeth 24 of the ascending walls 23 couple with the corresponding cavities of the descending walls 25 and that the slit 26 is defined around the free tab 43 of the film 42.

Finally, the two half-shells 21 and 22 are joined together inseparably, by being snapped together or by welding as previously mentioned.

The upper half-shell 22 is further provided with a transparent window 27, realised for example in a thin sheet of transparent plastic and positioned at the centre of the top wall, in such a way as to overlie the tray 40 of poisoned bait 3.

In a variant of the invention, not illustrated, the transparent window 27 is afforded in the lower half-shell 21, or in both half-shells 21 and 22.

The presence of one or more transparent windows 27 enables a user to check periodically whether the rodents have consumed the poisoned bait 3, without the user needing to have access to the inner chamber of the container 2, and therefore without coming into direct contact with the poisoned bait 3.

In a preferred aspect of the invention, at the centre of the enclosure defined by the ascending walls 23, the base of the lower half-shell 21 affords a depression 28 which is beneath the tray 40 of poisoned bait 3, and which in plan view exhibits a substantially four-lobed shape (see figure 8).

The central surface of the depression 28 is substantially flat, while the surfaces of the lobes are slightly inclined, thus defining connecting ramps which are oriented upwardly from the central surface of the depression 28 towards the surface surrounding the base of the lower half-shell 21.

A special insecticidal substance is applied on the base surface, in this example associated to a card 5 or other adhesive element, the substance being specially designed to attract and eliminate crawling insects, typically cockroaches or the like.

For this reason, the container 2 is provided with a plurality of small slits 29 which are aligned along the side walls, substantially at the base of the lower half-shell 21, and are designed to allow crawling insects to enter, so that the insects can reach the centre of the chamber and be trapped.

The tray 40 of poisoned bait 3 further exhibits four lateral feet, which rest on the base surface of the lower half-shell, and a central raised portion, the distance of which from the surface of the depression 28 is generally no less than 1 cm.

In this way, a space is defined between the central portion of the tray 40 and the depression 28, which space is sufficiently large to allow the passage of insects with feelers, such as cockroaches.

Preferably, the tray 40 of poisoned bait 3 is made of a transparent material, such that by looking through the window 27 of the container 2, a user can also check whether insects have been trapped in the depression 28.

Figure 10 shows a bait station 10 which corresponds to an alternative embodiment of the invention.

The bait station 10 comprises an external container 2 which in every respect is similar to the external container 2 described above, is provided with at least two access openings 20, and defines an inner chamber in which a poisoned bait 3 is contained in such a way as to be out of the reach of a user's hands.

In this embodiment, the poisoned bait 3 exhibiting a doughy consistency can be placed in the tray 40 without the removable film 42, or else it can be shaped into a substantially cylindrical form, and be stuck on a skewer which is stably fixed inside the container 2, in such a way that the poisoned bait 3 is in any case in a position where it can be reached by a rodent.

The poisoned bait 3 is sealed inside the container 2 by a single openable wrapping 11 which wraps the container 2 exteriorly, thus enclosing it, the wrapping for example being made of cellophane or other suitable material.

In this way, the user can tear and thus open the external wrapping 11 only when the user needs to put the bait station 10 in place and activate it.

Alternatively, the poisoned bait 3 could be sealed inside the container 2 by a plurality of individual removable films, for example made of flexible plastic material, each of which being arranged to close a respective access opening 20, and being removably attached to the external surface of the container 2, for example by gluing or hot-welding.

Each removable film must be provided with at least one free tab, which a user can pull with the fingers so as to tear and remove the film, in order to open the access openings 20 from outside, thus setting the bait station 10 in operation and activating it only when it is necessary to do so.

In a further variant of the invention, schematically illustrated in figure 11, retaining means are associated to the external surface of the container 2, which retaining means comprise a tab 51 which derives from the external surface of the container 2 and which exhibits a hole 52 for housing a fixing element, not illustated as of known type, such as a nail or a picket, destined to fixe the container to the rest surface.

Obviously, a person skilled in the art could introduce numerous technical/applicational modifications to the bait stations 1 and 10 described above, without thereby forsaking the ambit of the invention as claimed herein below.

## Claims

1. A bait station for rodent elimination, comprising an unopenable container (2) which is provided with at least an access opening (20) for a rodent, a poisoned bait (3) which is housed within the container (2) in such a way that the bait (3) cannot be touched by a user's hands, and means for sealing (40, 42, 43) the poisoned bait (3) inside the container (2), which means for sealing (40, 42, 43) can be opened from outside the container (2) **characterized in that** the bait station comprises a single continuous separator (23,25) which extends for the entire height of the container (2) positioned in front of the access opening (20), such as to prevent contact with the poisoned bait (3) from outside when said means for sealing are opened.

2. The bait station of claim 1, wherein the means for sealing comprise a tray (40) and a removable film (42) destined to enclose the poisoned bait (3) inside the tray (40), the tray (40) being housed inside the container (2) and the removable film (42) being provided with a free tab (43) which projects to outside the container (2).

3. The bait station of claim 2, wherein the continuous separator comprises at least two support elements (23, 25) which derive from a base wall and a top wall of the container (2) respectively, said tray (40) comprises a lateral edge (41), which is interposed and blocked in place between said two support elements (23, 25).

4. The bait station of claim 3, wherein a support element (23) of the support elements (23) is provided with at least a tooth (24), which can be inserted into a slot of a lateral edge (41) of the tray (40), and couples with a corresponding cavity afforded in another of the support elements (25), positioned opposite thereto.

5. The bait station of claim 3, wherein the lateral edge (41) extends along the perimeter of a mouth of the tray (40), and is blocked by two or more pairs of support elements (23, 25) which derive from the base and from the top wall of the container (2) respectively, and which are arranged in such a way as to define an open enclosure around the mouth of the tray (40).

6. The bait station of claim 1, wherein the container (2) comprises at least one transparent window (27) through which the poisoned bait (3), contained inside the container (2), is visible.

7. The bait station of claim 1, wherein the container (2) comprises at least two access openings (20) for a rodent.

8. The bait station of claim 1, wherein the container (2) comprises four side walls which give the container (2) a substantially rectangular shape in plan view, and in each of the side walls, at least one access opening (20) for a rodent is afforded.

9. The bait station of claim 1, wherein the container (2) receives an insecticide device (5), and comprises openings (29) which are suitable for allowing insects to access the bait station.

10. The bait station of claim 9, wherein the insecticide device (5) is housed within a depression (28) of the base wall of the container (2).

11. The bait station according to both claims 2 and 9, wherein the insecticide device (5) is arranged vertically beneath the tray (40), and is separated from the tray (40) by a sufficient distance to allow passage of insects.

12. The bait station of claim 11, wherein the tray (40) is transparent.

13. The bait station of claim 1, wherein the poisoned bait (3) is inserted on a skewer (11) internally of the container (2).

14. The bait station of claim 1, wherein the means for sealing comprise removable films (42) which are attached externally to the container (2), in such a way as to close the access openings (20).

15. The bait station of claim 1, wherein the means for sealing comprise an openable wrapping, which externally wraps and encloses the container (2).

16. The bait station of claim 1, **characterised in that** retaining means destined to fix the container to the rest surface are associated to the outside surface (2) of the container.

## Patentansprüche

1. Köderstation zur Beseitigung von Nagetieren, umfassend einen Behälter (2), der nicht geöffnet werden kann und der mit mindestens einer Zugangsöffnung (20) für ein Nagetier versehen ist, einen vergifteten Köder (3), der derart im Behälter (2) untergebracht ist, dass der Köder (3) nicht mit den Händen eines Benutzers berührt werden kann, und Mittel zum Versiegeln (40,42, 43) des vergifteten Köders (3) im Inneren des Behälters (2), wobei die Mittel zum Versiegeln (40, 42, 43) von außerhalb des Behälters (2) geöffnet werden können, **dadurch gekennzeichnet, dass** die Köderstation einen einzelnen durchgehenden Separator (23, 25) umfasst, der sich über die gesamte Höhe des Behälters (2) erstreckt und der vor der Zugangsöffnung (20) angeordnet ist, sodass Kontakt mit dem vergifteten Köder (3) von außerhalb, wenn die Mittel zum Versiegeln geöffnet sind, verhindert wird.

2. Köderstation nach Anspruch 1, wobei die Mittel zum Versiegeln eine Schale (40) und eine entfernbare Folie (42) umfassen, die dafür vorgesehen ist, den vergifteten Köder (3) in der Schale (40) einzuschließen, wobei die Schale (40) im Inneren des Behälters (2) untergebracht ist und die entfernbare Folie (42) mit einer freistehenden Lasche (43) ausgestattet ist, die aus dem Behälter (2) hervorsteht.

3. Köderstation nach Anspruch 2, wobei der durchgehende Separator mindestens zwei Stützelemente (23, 25) umfasst, die von einer Bodenwandung beziehungsweise einer Deckwandung des Behälters (2) ausgehen, wobei die Schale (40) eine Seitenkante (41) umfasst, die zwischen den beiden Stützelementen (23, 25) eingeschoben ist und von ihnen am Platz arretiert wird.

4. Köderstation nach Anspruch 3, wobei ein Stützelement (23) der Stützelemente (23) mit mindestens einem Zahn (24) ausgestattet ist, der in einen Schlitz einer Seitenkante (41) der Schale (40) eingeführt werden kann und sich mit einer entsprechenden Mulde koppelt, die in einem anderen der Stützelemente (25), das ihm gegenüber angeordnet ist, vorhanden ist.

5. Köderstation nach Anspruch 3, wobei die Seitenkante (41) entlang des Umfanges eines Mundloches der Schale (40) verläuft und durch zwei oder mehr Paare von Stützelementen (23, 25) arretiert ist, die von der Boden- beziehungsweise von der Deckwandung des Behälters (2) ausgehen und die derart angeordnet sind, dass sie eine offene Einfassung um das Mundloch der Schale (40) definieren.

6. Köderstation nach Anspruch 1, wobei der Behälter (2) mindestens ein transparentes Fenster (27) umfasst, durch das der vergiftete Köder (3), der im Inneren des Behälters (2) enthalten ist, sichtbar ist.

7. Köderstation nach Anspruch 1, wobei der Behälter (2) mindestens zwei Zugangsöffnungen (20) für ein Nagetier umfasst.

8. Köderstation nach Anspruch 1, wobei der Behälter (2) vier Seitenwandungen umfasst, die dem Behälter (2) in der Draufsicht eine im Wesentlichen rechteckige Form verleihen, und in jeder der Seitenwandungen mindestens eine Zugangsöffnung (20) für ein Nagetier vorhanden ist.

9. Köderstation nach Anspruch 1, wobei der Behälter (2) eine Insektizidvorrichtung (5) aufnimmt und Öffnungen (29) umfasst, die geeignet sind, Insekten den Zugang zur Köderstation zu ermöglichen.

10. Köderstation nach Anspruch 9, wobei die Insektizidvorrichtung (5) in einer Vertiefung (28) der Bodenwandung des Behälters (2) untergebracht ist.

11. Köderstation nach den beiden Ansprüchen 2 und 9, wobei die Insektizidvorrichtung (5) vertikal unter der Schale (40) angeordnet ist und von der Schale (40) durch einen ausreichenden Abstand getrennt ist, um den Durchtritt von Insekten zu ermöglichen.

12. Köderstation nach Anspruch 11, wobei die Schale (40) transparent ist.

13. Köderstation nach Anspruch 1, wobei der vergiftete Köder (3) auf einen Spieß (11) im Inneren des Behälters (2) gesteckt ist.

14. Köderstation nach Anspruch 1, wobei die Mittel zum Versiegeln entfernbare Folien (42) umfassen, die derart außen am Behälter (2) angebracht sind, dass sie die Zugangsöffnungen (20) verschließen.

15. Köderstation nach Anspruch 1, wobei die Mittel zum Versiegeln eine zu öffnende Umhüllung aufweisen, die den Behälter (2) außen umhüllt und einschließt.

16. Köderstation nach Anspruch 1, **dadurch gekennzeichnet, dass** Haltemittel, die dafür vorgesehen sind, den Behälter an der Auflagefläche zu halten, an der Außenfläche (2) des Behälters angebracht sind.

## Revendications

1. Point d'appât pour l'élimination de rongeurs comportant une boîte non ouvrante (2) munie d'au moins une ouverture d'accès (20) pour un rongeur, d'un appât empoisonné (3) placé à l'intérieur de la boîte (2) de manière à empêcher le contact de l'appât (3) par les mains d'un utilisateur, et d'un dispositif de scellage (40,42, 43) de l'appât empoisonné (3) à l'intérieur de la boîte (2), lequel dispositif de scellage (40, 42, 43) peut être ouvert de l'extérieur de la boîte (2), **caractérisé par le fait que** le point d'appât comporte un séparateur (23, 25) continu simple se prolongeant sur toute la hauteur de la boîte (2) positionné devant l'ouverture d'accès (20) de manière à empêcher le contact avec l'appât empoisonné (3) de l'extérieur lorsque ledit dispositif de scellage est ouvert.

2. Le point d'appât selon la revendication 1, où le dispositif de scellage comporte un bac (40) et un film amovible (42) destiné à enfermer l'appât empoisonné (3) à l'intérieur du bac (40), lequel bac (40) est logé à l'intérieur de la boîte (2) et ledit film amovible (42) est pourvu d'une languette libre (43) se projetant à l'extérieur de la boîte (2).

3. Le point d'appât selon la revendication 2, où le séparateur continu comporte au moins deux éléments de support (23, 25) partant respectivement d'une paroi de base et d'une paroi supérieure de la boîte (2), le bac (40) comporte un rebord latéral (41) interposé et bloqué en place entre lesdits deux éléments de support (23, 25).

4. Le point d'appât selon la revendication 3, où un élément de support (23) des éléments de support (23) est muni d'au moins une dent (24) pouvant s'introduire dans une encoche d'un rebord latéral (41) du bac (40) et s'accouple avec une cavité correspondante aménagée dans un autre des éléments de support (25) disposé face à lui.

5. Le point d'appât selon la revendication 3, où le rebord latéral (41) se prolonge sur le périmètre d'une ouverture du bac (40), et se trouve bloqué par deux ou plusieurs paires d'éléments de support (23, 25) émanant respectivement de la base et de la paroi supérieure de la boîte (2), lesquelles sont disposées de manière à délimiter une enceinte ouverte autour de la bouche du bac (40).

6. Le point d'appât selon la revendication 1, où la boite (2) comporte au moins une fenêtre transparente (27) à travers laquelle l'appât empoisonné (3) à l'intérieur de la boîte (2) est visible.

7. Le point d'appât selon la revendication 1, où la boîte (2) comporte au moins deux ouvertures d'accès (20) pour un rongeur.

8. Le point d'appât selon la revendication 1, où la boîte (2) comporte quatre parois latérales conférant à la boîte (2) une forme sensiblement rectangulaire en vue en plan, et dans chacune des parois latérales au moins une ouverture d'accès (20) aménagée pour un rongeur.

9. Le point d'appât selon la revendication 1, où la boîte (2) reçoit un dispositif insecticide (5) et comporte des ouvertures (29) permettant à des insectes d'accéder au point d'appât.

10. Le point d'appât selon la revendication 9, où le dispositif insecticide (5) se loge dans un creux (28) aménagé dans la paroi de base de la boîte (2).

11. Le point d'appât selon les deux revendications 2 et 9, où le dispositif insecticide (5) est disposé à la verticale en dessous du bac (40), et séparé du bac (40) d'une distance suffisante pour permettre le passage d'insectes.

12. Le point d'appât selon la revendication 11, où le bac (40) est transparent.

13. Le point d'appât selon la revendication 1, où l'appât empoisonné (3) est passé sur une brochette (11) à l'intérieur de la boîte (2).

14. Le point d'appât selon la revendication 1, où le dispositif de scellage comporte des films amovibles (42) s'attachant à l'extérieur de la boîte (2) de manière à obturer les ouvertures d'accès (20).

15. Le point d'appât selon la revendication 1, où le dispositif de scellage comporte un enveloppement ouvrable, enveloppant par l'extérieur et enfermant la boîte (2).

16. Le point d'appât selon la revendication 1, **caractérisé par le fait que** les moyens de retenue destinés à fixer la boîte sur la surface d'appui sont associés à la surface extérieure (2) de la boîte.
